# EUROPEAN PATENT APPLICATION

(11) **EP 1 826 943 A1**
(43) Date of publication of application: **29.08.2007**
(21) Application number: 06015885.4
(22) Date of filing: 31.07.2006
(51) Int. Cl.: H04L 12/24, G06F 17/30

(54) **Method for searching information in a network**

(71) Applicant: SIEMENS AKTIENGESELLSCHAFT, 80333 München (DE)
(72) Inventor: Nagaraj, Nagavishnu, Koramangala, Bangalore - 560095 (IN); PD, Raghvendra, Vidyaranyapura, 560097 Bangalore (IN)
(74) Representative: Kley, Hansjörg

(57) **Abstract**

In order to simplify telecommunication network management, a search query is received by a search system (130b). The search system is connected to a data store (111, 112, 113, 114, 115) by means of a search adaptor (131, 132, 133, 134, 135). The data store (111, 112, 113, 114, 115) is comprised by an element management system (100B) or by a network element (110) that is administrated by the element management system (100b). The search query is forwarded from the search system (130b) to the search adaptor (131, 132, 133, 134, 135). The search adaptor (131, 132, 133, 134, 135) retrieves a search result that is based on the search query from the data store (111, 112, 113, 114, 115). The search adaptor (131, 132, 133, 134, 135) then forwards the search result to the search system (130b). With regard to the search query a relevance of the search result is then evaluated.

## Description

The present invention relates to a method for searching information in a network aacording to claim 1 as well as a claim for a system carrying out a method for searching information according to claim 10.

Large telecommunication networks comprise a plurality of network elements. A network element is for example a gateway in an IP network or a home location register (HLR) in a mobile network. In order to manage a network element, the network element is assigned to an element management system. However, a network element can also be managed by several element management systems, for example for redundancy reasons or in order to split up the different tasks for administrating the network element. An element management system can be used for managing one or several network elements.

In order to manage a telecommunication network, a network management system is foreseen. Usually standardized interfaces are used, in order to connect several element management systems to the network management system.

Modern telecommunication networks comprise a large number of network elements and element management systems. Sometimes modern networks even comprise several network management systems. In order to handle such complex networks, the network administrator (i.e. the person who manages the data network) needs a considerable amount of know-how. In order to find out what to do, in many cases the network administrator first needs to look up a lot of information, which is located in several data stores within the element management systems and/or within the network elements.

For a telecom management network, examples of data stores that are located within the element management system are log records, security records, alarm records, software safeguard records, administration records, performance records, trace records and configuration records. These data stores have the following content:
Log records: Generally an activity history of configuration management actions of network administrators and/or applications;
Security records: A record of security sensitive operations and/or violations;
Alarm records: A prioritized list of active and cleared alarms from network elements and/or element management systems;
Software safeguard records: A list of software alerts related to software malfunction, overload, recovery and/or outages; Administration records: Information on network element addressing, user privileges and/or user profiles;
Performance records: Statistics on measured performance attributes of a network element, e.g. a number of dropped calls per day;
Trace records: Software debugging information of a network element and/or an element management system, in order to troubleshoot any malfunctions in software;
Configuration records: Information regarding network planning of the customer, e.g. mapping of ports to subscribers.

The operator workflow for an element management system typically comprises the usage of the log viewer, the event viewer, the alarm viewer, the admin application or the performance viewer. Examples of data stores which are located within a network element are subscriber data, alarm data, performance data, signalling data and routing data. The operator workflow for a network element typically comprises the execution of requests, the performing of a file transfer, the usage of the telnet application, monitoring and clearing of alarms reported in the network,

Sometimes a basic knowledge of the network elements and applications is necessary in order to even find out what to search for. If for example in a telecom management network a security violation occurs, the network administrator needs to know, that he needs to access the security log viewer, the user activity viewer and the operating system event viewer, in order to find out which are the appropriate measures. If, as another example, a runtime execution error occurs, the network administrator needs to know, that he needs to access the application event viewer, the user activity viewer and the software safeguard viewer.

It is therefore the objective of the present invention to simplify network administration and/or network management.

This objective is solved with the measures taken in claim 1 and also with the measures taken in claim 10.

According to the invention, a search query is received by a search system. The search system is connected to a data store by means of a search adaptor. The data store is comprised by an element management system or by a network element that is administrated by the element management system. The search query is forwarded from the search system to a search adaptor. The search adaptor retrieves a search result that is based on the search query from the data store. The search adaptor then forwards the search result to the search system. With regard to the search query a relevance of the search result is then evaluated.

Advantageous embodiments are described in the dependent claims:
It is advantageous to forward of the search query from the search system to a plurality of search adaptors, whereas each search adaptor connects the search system to a data store. Each data store is comprised by the element management system or by a network element which is administrated by an element management system. Each search adaptor retrieves search results from the data stores it is connected to. The retrieved search results are forwarded from the search adaptors to the search system. The relevance of a part or all of the retrieved search results is then evaluated.

In another advantageous embodiment a search query is submitted to at least two different element management systems, each of which comprises a search system and at least one search adaptor that is connected to a data store. The search adaptors retrieve search results from the data stores they are connected to and submit the search results to the search system. Also in this embodiment relevances of the search results are evaluated.

Especially in case more than one element management system is operative, it is advantageous if a network management system is used. The network management system has the task to provide one user interface for administrating the complete network, in particular for administrating all element management systems. The search query can then be inputted by the network administrator into the network management system. The network management system forwards the search query to the element management systems. In return the search results from the element management systems are forwarded to the network management system.

In yet another advantageous embodiment the network management system comprises a search application, which evaluates the relevance of the search results that are received from the element management systems. Additionally the search application can also order the search results according to the evaluated relevance. However, the search application does not necessarily need to be comprised by the network management system, since all search results can also be evaluated by the element management systems, in particular by the search systems and/or by the search adaptors.

In many cases, when an event, for example an error, occurs within the network, this can have consequences in different data stores of the network. In current telecom management systems the network administrator has to look up information in several data stores in order to find out what event has occurred within the network. By grouping together search results relating to one specific entity or event within the network, the work flow of identifying the event can be automated. Network administrators therefore require less know-how in order to identify events within the network.

The invention and its advantages compared to the state of the art is in the following described based on the figures:
- Figure 1: shows a telecommunication network 1a according to the state of the art;
- Figure 2: shows a telecommunication network 1b according to an embodiment of the invention;
- Figure 3: shows a telecommunication network 1c according to a further embodiment of the invention.

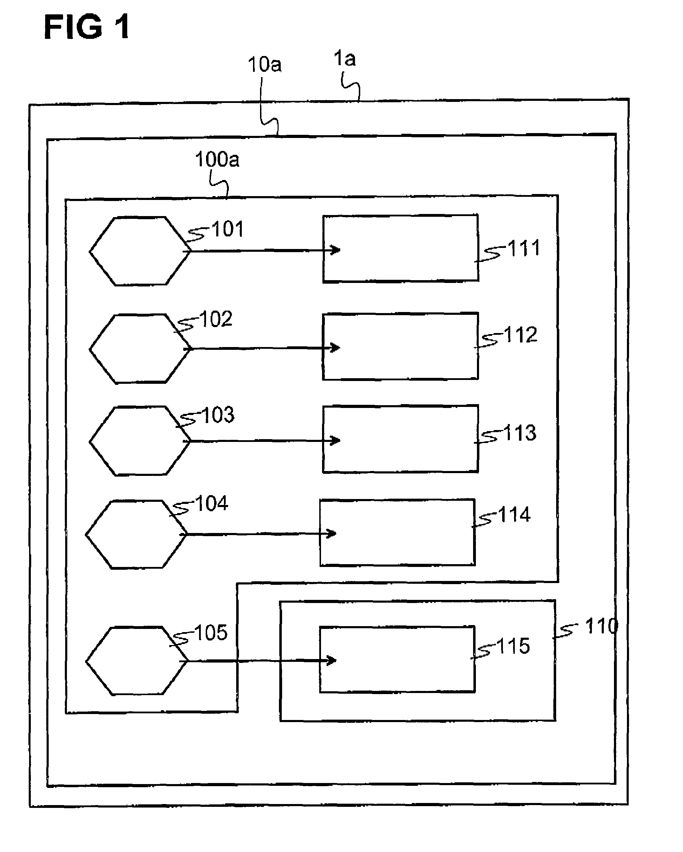

Figure 1 shows a telecommunication network 1a according to the state of the art. The telecommunication network 1a comprises a telecom management system 10a. The telecom management system 10a comprises an element management system 100a and a network element 110. The element management system 100a comprises a plurality of applications 101, 102, 103, 104, 105 and a plurality of data stores 111, 112, 113, 114. The network element 110 comprises at least one data store 115. Each application is used in order to perform one or several tasks, according to the following:
The Admin Application 101 is used in order to access the network administration database 111. The event log viewer 102 is used to access the element management system's events and traces data store 112. The alarm viewer 103 is used in order to access the fault management database 113. The performance management application 104 is used in order to access the files required for performance management 114. The customer application 105 is used in order to access the subscriber and signalling database 115, which is located in a network element 110.

In some cases it is also possible, that an application accesses more than one data store. For e.g. the log viewer can access the security records, software safeguard records and trace records.

Figure 1 also illustrates the workflow a network administrator has to go through, according to the state of the art. Thereby the network administrator basically has to launch a separate application 101, 102, 103, 104, 105 in order to access one specific data store 111, 112, 113, 114, 115 or a group of specific data stores 111, 112, 113, 114, 115. Modern element management systems usually comprise more than only five applications of the example in figure 1. Additionally, a modern network usually also comprises a large number of network elements and element management systems. In order to manage a complex network, the network manager therefore needs a considerable amount of know-how. First of all, he needs knowledge about all the applications and the data stores they access. Additionally each application displays the information it has retrieved from its respective data stores independently from other applications. As a consequence, if for example a network connection outage error occurs, records are generated in the alarm data store, in the logging data store, the trace data store and thus errors are reported by log viewer, alarm viewer and trace viewer. It is not easy for the network administrator to assign all these error reports to the same event. In addition, the workflow that is necessary in order to find out the true error source and in order to find a way to correct the error, requires considerable know-how and experience. The work of the network administrator is additionally complicated, for in many cases each application presents the data retrieved from the data store in a specialized format.

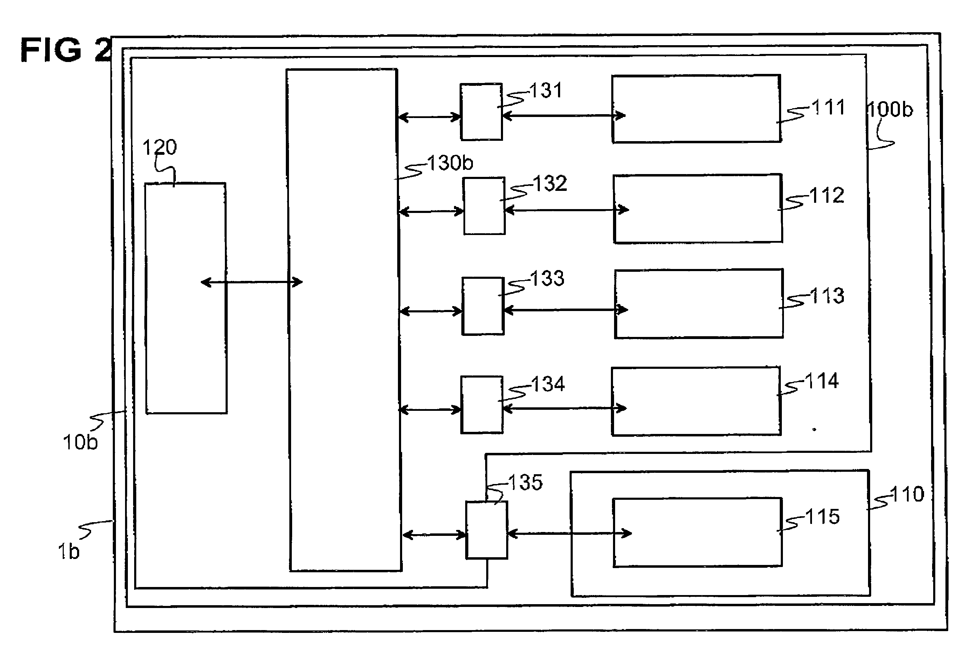

Figure 2 shows a telecommunication network 1b according to an embodiment of the invention. The telecommunication network 1b comprises a telecom management system 10b. The telecom management system 10b comprises an element management system 100b and the network element 110. The element management system 100b comprises a search application 120, a search system 130b and a plurality of data stores 111, 112, 113, 114. The network element 110 comprises at least one data store 115. In the example of figure 2 the same data stores 111, 112, 113, 114, 115 as in figure 1 are used. However, the usage of further and/or different and/or less data stores is possible as well. Each data store 111, 112, 113, 114, 115 is connected by means of a search adaptor 131, 132, 133, 134, 135 to the search system.

The search adaptors 131, 132, 133, 134, 135 serve for connecting data stores of different structures to the search system. However, it is also possible, that a search adapter is used to connect the search system to two or more data stores if the data stores have compatible connection specifications.

A search query can be inputted by a network administrator into the search application 120. The search application 120 forwards the search query to the search system 130b. The search query is then forwarded from the search system 130b to the search adaptors 131, 132, 133, 134, 135. The search adaptors retrieve search results from the data store 111, 112, 113, 114, 115 and forward the search results to the search system 130b. A relevance of each search result is then evaluated by the search system. The relevance can be based on various possibilities like for example a matching regular expression, simple text match, tagged match. In addition, search results which relate to one specific entity or event within the network are grouped together. This can be achieved by pre-configured meta information in the search adaptors regarding data store relations.

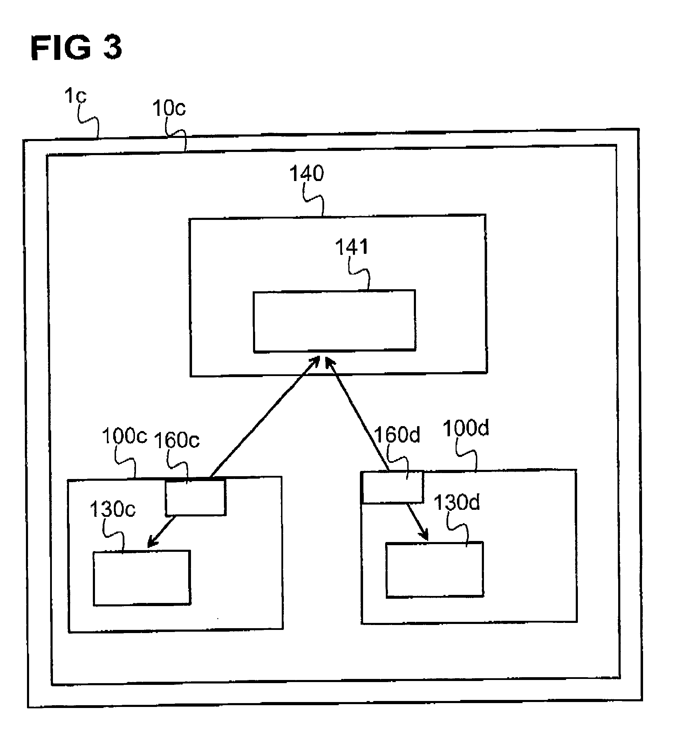

Figure 3 shows a telecommunication network 1c according to a further embodiment of the invention. The telecommunication network 1c comprises a telecommunication management system 10c. The telecommunication management system 10c comprises a network management system 140 and two element management systems 100c, 100d.

The element management systems 100c, 100d both comprise a structure which is similar or equal to the structure of the element management system 100b of figure 2. In particular, each of the element management systems 100c, 100d of figure 3 comprises a search system 130c, 130d, which is connected by means of search adaptors to one or more data stores. However, a search application, which basically has the task of a user interface, is optional in the element management systems 100c, 100d. Instead the network management system 140 comprises a search application 141. The element management systems 100b, 100c each comprise a connection interface 160c, 160d for the connection to the network management system 140.

A search query can be inputted by a network administrator into the search application 140. The search application 140 forwards the search query to the search systems 130c, 130d of the element management systems 100c, 100d. Each search system 130c, 130d then forwards the search query to its search adaptors. The search can for example be performed by involving fuzzy logic. The search adaptors retrieve search results from the data store they are connected to and forward the search results to the search systems 130c, 130d. Each of the search systems 130c, 130d forwards its search results to the search application 140. A relevance of each search result is then evaluated by the search system 140. The relevance could be based on various possibilities like for example a matching regular expression, simple text match, tagged match. In addition, search results which relate to one specific entity or event within the network are grouped together. This can be achieved by pre-configured meta information in the search adaptors regarding data store relations.

In a variant of the embodiment of figure 3, the evaluation of the relevance of a search result can also be performed by a search system 130c, 130d, for example by adding a relevance value between 0 and 1 to the search result, whereas 0 indicates an irrelevant search result and 1 indicates a most relevant search result. All search results are then forwarded together with their relevance values to the network management system 140, preferably in the search application 141, where they are ordered according to the relevance value.

With a network management system as described in figures 3 and 2, a network administrator can search for all administration related information within the whole network, by using only the search application. The search results can be given back in an ordered manner to the network administrator in form of links to items, such as log-files, data stores and/or applications. By clicking on a link, the network administrator can then directly access the desired item.

Due to the search method, a network administrator can also monitor all FCAPS which comprise fault management, configuration management, accounting management, performance management, security management activities of a particular element management system user, or all activities on a particular network element from all element management systems or network management systems. If for example the network administrator searches for a network element name, the evaluation of the relevance of the search results could be designed such that the first search result is a performance chart of the network element and the second search result is an alarm summary table of the network element. Subsequent results can be references to the network element in log-files of other network elements.

On encountering an error situation (e.g. a failed task or a network element disconnection), the network administrator can search for error information across all log-files within the network management system. Log-entries that originate from the same event can be correlated and grouped together, even if the log-entries are located in different log-files of different network elements and/or element management systems.

### List of Reference Signs

- 1a, 1b, 1c: telecommunication network
- 10a, 10b, 10c: telecom management system
- 100a, 100b, 100c, 100d: element management system
- 101, 102, 103, 104, 105: application
- 110: network element
- 111, 112, 113, 114, 115 120: data store
- 130b, 130c, 130d: search system
- 131, 132, 133, 134, 135: search adaptor
- 140: network management system
- 141: search application
- 160c, 160d: connection interface

## Claims

1. A method for searching information in a network, comprising the steps of
a) receiving a search query by a search system (130b, 130c, 130d) ;
b) forwarding the search query to a search adaptor (131, 132, 133, 134, 135), said search adaptor connecting the search system (130b, 130c, 130d) to a data store (111, 112, 113, 114, 115) whereas said data store (111, 112, 113, 114, 115) is comprised by an element management system (100b, 100c, 100d) or by a network element (110) that is administrated by the element management system (100b, 100c, 100d);
c) retrieving search results based on the search query by the search adaptor (131, 132, 133, 134, 135) from the data store (111, 112, 113, 114, 115);
d) forwarding the search results from the search adaptor (131, 132, 133, 134, 135) to the search system (130b, 130c, 130d);
e) evaluating a relevance of at least a part of the retrieved search results with regard to the search query.

2. The method of claim 1
**characterized in that**
step b) comprises the forwarding of the search query to a plurality of search adaptors (131, 132, 133, 134, 135), whereas each search adaptor (131, 132, 133, 134, 135) connects the search system (130b, 130c, 130d) to a data store (111, 112, 113, 114, 115) whereas each of said data stores (130b, 130c) is comprised by the element management system (100b, 100c, 100d) or by a network element (110) which is administrated by the element management system (100b, 100c, 100d) ;
step c) comprises the retrieving of search results based on the search query by the search adaptors (131, 132, 133, 134, 135) from the data stores (130b, 130c);
step d) comprises the forwarding of the retrieved search results from the search adaptors (131, 132, 133, 134, 135) to the search system (130b, 130c, 130d);
step e) comprises the evaluation of the relevance of at least a part of the retrieved search results.

3. The method of claim 1 or 2
**characterized in that**
the steps a) to e) are performed for at least two different element management systems (100b, 100c, 100d) for the same search query.

4. The method of any one of the preceding claims
**characterized in that**
for step a) the search query is received by the search system (130b, 130c, 130d) from a network management system (140) and that for step d) the search result is forwarded to the network management system (140).

5. The method of claim 3 or 4
**characterized in that**
for each element management system (100b, 100c, 100d) a separate search system (130b, 130c, 130d) is used.

6. The method of anyone of the preceding claims
**characterized in that**
search results which relate to one specific entity or event within the network are grouped together.

7. The method of anyone of the preceding claims
**characterized in that**
a search application runs within the network management system (140) and
the evaluation of the relevance of the search results is performed within a search application.

8. The method of anyone of the preceding claims
**characterized in that**
the evaluation of the search results is at least partially performed within the search system (130b, 130c, 130d).

9. The method of anyone of the preceding claims
**characterized in that**
the network is a telecommunication network.

10. A system comprising means that are suited to perform the method of any one of the preceding claims.
